# EUROPÄISCHE PATENTSCHRIFT

(11) **EP 1 030 279 B1**
(45) Veröffentlichungstag und Bekanntmachung des Hinweises auf die Patenterteilung: **18.08.2004**
(21) Anmeldenummer: 99123507.8
(22) Anmeldetag: 25.11.1999
(51) Int. Cl.: G08B 17/10

(54) **Verfahren zum Detektieren von Entstehungsbränden und aspirative Branderkennungsvorrichtung zur Durchführung des Verfahrens**
Method for detecting incipient fire and aspirating device implementing said method
Procédé pour détecter des incendies naissants et dispositif d'aspiration pour mettre en oeuvre le procédé

(30) Priorität: 15.02.1999 DE 29902638 U
(43) Veröffentlichungstag der Anmeldung: 23.08.2000
(73) Patentinhaber: Wagner Alarm- und Sicherungssysteme GmbH, 30853 Langenhagen (DE)
(72) Erfinder: Wagner, Ernst-Werner, 29308 Winsen (DE)
(74) Vertreter: Rupprecht, Kay, Dipl.-Ing.

(56) Entgegenhaltungen:
- DE-A- 2 503 623
- GB-A- 568 857
- US-A- 4 764 758

## Beschreibung

Die vorliegende Erfindung betrifft sowohl ein Verfahren zum Detektieren von Entstehungsbränden nach dem Oberbegriff des Anspruchs 6 als auch eine aspirative Branderkennungsvorrichtung zur Durchführung des Verfahrens nach dem Oberbegriff des Anspruchs 1. Bei dem Verfahren werden einem Detektor zum Erkennen einer Brandkenngröße über eine Zuleitung, die eine Anzahl von Ansaugöffnungen aufweist, kontinuierlich Umgebungsproben zugeführt. Wenn der Detektor eine Brandkenngröße detektiert, wird ein Signal an eine Brandmeldezentrale abgegeben. Beim Ausfall des ersten Lüfters oder dessen Versorgungsspannung wird zum Beispiel mittels eines Kontaktkopplers eine Störungsmeldung an die Brandmeldezentrale übertragen. Die genannte Vorrichtung zur Durchführung des Verfahrens enthält einen Detektor zum Erkennen einer Brandkenngröße, und einen ersten Lüfter, der dem Detektor über eine Zuleitung, die mit Ansaugöffnungen versehen ist, Umgebungsluftproben zuführt.

Sowohl das Verfahren als auch Vorrichtungen dieser Art sind bekannt und dienen der Frühesterkennung von Bränden bereits in ihrer Entstehungsphase. Typische Anwendungsbereiche sind entweder Räume mit hochwertigen oder wichtigen Einrichtungen, wie beispielsweise Räume mit EDV-Anlagen in Banken, bei Versicherungen oder in Rechenzentren, oder aber die EDV-Anlagen selbst. Zu diesem Zweck werden der Raumluft oder der Gerätekühlluft ständig representative Teilmengen entnommen und über wenigstens eine Zuleitung dem Detektor zum Erkennen einer Brandkenngröße zugeführt.

Unter dem Begriff "Zuleitungen" sind vorzugsweise, aber nicht ausschließlich Rohrleitungen zu verstehen, die für einen Raumschutz beispielsweise unter der Raumdecke befestigt sind und zu einer Lufteintrittsöffnung in dem Gehäuse des Detektors führen, und die die Raum- oder Gerätekühlluft durch Ansaugöffnungen einsaugen, welche in den Rohrleitungen vorgesehen sind. Bei einer Vorrichtung der eingangs genannten Art, die für den Raumschutz vorgesehen ist, und bei der die Zuleitung vorzugsweise aus einer oder mehreren Rohrleitungen besteht, sind die Ansaugöffnungen in den Rohrleitungen in regelmäßigen Abständen angeordnet.

Unter dem Begriff "Brandkenngröße" werden physikalische Größen verstanden, die in der Umgebung eines Entstehungsbrandes meßbaren Veränderungen unterliegen. Beispiele hierfür sind die Umgebungstemperatur, der Feststoff- oder Flüssigkeits- oder Gasanteil in der Umgebungsluft (Bildung von Rauchpartikeln oder Rauchaerosolen oder Bildung von Dampf) oder die Umgebungsstrahlung.

Eine aspirative Branderkennungsvorrichtung ist in höchstem Maße abhängig von der Aufrechterhaltung des Luftstroms, welcher durch den ersten Lüfter als ansaugende Kraft erzeugt wird. Um die Aufrechterhaltung dieses Luftstroms zu überwachen, ist häufig ein Luftstromsensor, mit dem der Massenstrom der durch die Zuleitung angesaugten Luft auf Änderungen überwacht wird, oder eine Luftdrehzahlüberwachung vorgesehen.

Ein Beispiel für eine Branderkennungsvorrichtung mit zwei Ansaugrohren ist in der DE 21 36 968 B2 beschrieben, bei der jedoch keine Überwachung der Luftströme erfolgt. Weitere Vorrichtungen dieser Art sind aus der DE 196 05 637 C1, der DE 295 18 042 U1 oder der DE 33 48 107 C2 bekannt. Aus dem Dokument GB568857 ist eine Branderkennungsvorrichtung mit einem Lufterausfallalarm bekannt.

In Deutschland hat der Verband der Schadenversicherer (VdS) Richtlinien für die Auslegung aspirativer Branderkennungsvorrichtungen erlassen, welche beispielsweise die Luftstromüberwachung und insbesondere auch die Ausfallsicherheit des Lüfters betreffen. Laut diesen Richtlinien darf mit einer aspirativen Branderkennungsvorrichtung, die mit einem Lüfter ausgerüstet ist, auch nur ein Meldebereich überwacht werden, dessen Größe auf 1600 m² bzw. 5 Räume definiert ist. So ist beispielsweise für jeden Meldebereich mindestens eine Alarmmeldung abzugeben und es ist auch für jeden Meldebereich eine Luftstromüberwachung zu gewährleisten, damit eine Verstopfung des Rohrsystems und ein Rohrbruch vor der letzten Ansaugöffnung als Störung gemeldet werden können.

Der französische Verband der Schadenversicherer, "Assemblée Plénière des Sociétés d'Assurances Dommages" (APSAD), geht mit seinen Anforderungen sogar noch weiter: Die APSAD empfiehlt, die Überwachungsfläche eines hochempfindlichen Rauchansaugsystems auf 800 oder 1000 m² zu begrenzen, wenn es nur einen Melder und nur einen Lüfter besitzt, weil hochempfindliche Rauchansaugsysteme üblicherweise in Bereichen mit hoher Wertkonzentration eingesetzt werden.

An diesen Auflagen setzt die vorliegende Erfindung an, als deren Aufgabe es angesehen wurde, Maßnahmen zur Erhöhung der Ausfallsicherheit zu treffen, so daß mit einer einzigen aspirativen Branderkennungsvorrichtung mehr als nur ein Meldebereich überwacht werden kann.

Diese Aufgabe wird bei einer Branderkennungsvorrichtung mit den eingangs beschriebenen Merkmalen erfindungsgemäß durch einen zweiten Lüfter gelöst, der im Ansaugsystem beispielsweise in Reihe mit dem ersten Lüfter angeordnet ist. Alternativ könnte der zweite Lüfter auch parallel zum ersten Lüfter angeordnet sein.

Die der vorliegenden Erfindung zugrundeliegende Aufgabe wird ferner bei einem Verfahren der eingangs genannten Art dadurch gelöst, daß ein zweiter Lüfter, der in Reihe oder parallel zum ersten Lüfter angeordnet ist, eingesetzt wird, und die Umgebungsluftproben über eine Verbindungsleitung durch den zweiten Lüfter angesaugt und dem Detektor zugeführt werden.

Falls in der Branderkennungsvorrichtung der Lüfter oder dessen Versorgungsspannung ausfällt, wird auf Störung erkannt und der zweite Lüfter, der im Normalbetrieb ausgeschaltet ist, wird gestartet. Dadurch ergeben sich folgende bemerkenswerte Vorteile in der Störungsanalyse: Liegt die Störungsursache bei dem ersten Lüfter, so ist die Branderkennungsvorrichtung durch die Redundanz des zweiten Lüfters wieder voll funktionsfähig. Wegen der Störungsmeldung wird ein Service-Techniker gerufen, der dann den defekten ersten Lüfter tauschen und das Alarmsystem zurücksetzen wird. War die Störungsursache zum Beispiel eine Verstopfung der Ansaugrohre, so ändert sich durch das Zuschalten des zweiten Lüfters nichts. Der Service-Techniker wird daran den Störungsgrund feststellen, die Ansaugrohre reinigen und das System wieder in Betrieb nehmen. Ein besonderer Vorteil hinsichtlich der Wettbewerbsfähigkeit der erfindungsgemäßen Branderkennungsvorrichtung ist darin zu sehen, daß durch die Lüfterredundanz die Forderung des VdS an die Ausfallsicherheit derart erfüllt wird, daß mit der Branderkennungsvorrichtung auch mehr als nur ein Meldebereich überwacht werden darf. Mit den bekannten Branderkennungsvorrichtungen ohne Lüfterredundanz müßten 4 x 5 Räume mit 4 Branderkennungsvorrichtungen überwacht werden, was 4 Lüfter, 4 stabilisierte Spannungsversorgungen und 4 Luftstromüberwachungen bedeutet. Mit der erfindungsgemäßen Branderkennungsvorrichtung können alle 4 x 5 Räume auf einmal überwacht werden, so daß zum Beispiel die Anschaffungs- und Energiekosten für 2 Lüfter, 3 stabilisierte Spannungsversorgungen und 3 Luftstromüberwachungen eingespart werden können.

Vorteilhafte Weiterbildungen der Erfindung sind in den Unteransprüchen angegeben.

Vorzugsweise wird der zweite Lüfter direkt aus der Notstromversorgung gespeist, die selbst redundant aufgebaut ist. Fällt die Netzspannung aus, so übernehmen Akkus die Lüfterversorgung.

Von besonderer Bedeutung ist es, daß der zweite Lüfter vorzugsweise erst im Falle einer Störung im Ansaugweg in Betrieb geht.

Das hat gerade bei Anlagen mit Notstromversorgung den Vorteil, daß die Akkukapazität nicht verdoppelt werden muß.

Es hat sich als vorteilhaft erwiesen, wenn der erste Lüfter, und der zweite Lüfter über getrennte Kabelwege mit der Notstromversorgung verbunden sind. Bei einer Sabotage, z. B. bei Durchschneiden eines Kabels, wird sehr wahrscheinlich nur einer der beiden Kabelwege unterbrochen.

Optional können der erste und der zweite Lüfter mit einer stabilisierten Spannung versorgt werden, damit die Ansaugleistung trotz möglicher Spannungsschwankungen der Notstromversorgung konstant bleibt. Bei einem Stromausfall können sich nämlich die Notstrombatterien entladen und die Spannung der Notstromversorgung kann von 30 Volt auf unter 21 Volt absinken. Damit beim Entladen der Akkus keine Luftstromstörung entsteht, kann der erste Lüfter standardmäßig mit einer stabilisierten Spannung von beispielsweise 12 V versorgt werden, während eine solche stabilisierte Spannungsversorgung beim zweiten Lüfter eingespart werden kann, weil die Störung sowieso schon anliegt und eine stabilisierte Spannungsversorgung relativ teuer ist.

Als vorteilhafte Weiterbildung des erfindungsgemäßen Verfahrens ist vorgesehen, daß der erste Lüfter und der zweite Lüfter beim Auftreten eines Fehlers in der zentralen Stromversorgung aus einer Notstromversorgung gespeist werden. Somit ist eine hohe Verläßlichkeit der Branderkennungsvorrichtung gegeben.

Im folgenden wird ein bevorzugtes Ausführungsbeispiel der Erfindung anhand einer Zeichnung näher erläutert.

Es zeigen:
- Fig. 1: ein Blockschaltbild einer aspirativen Branderkennungsvorrichtung gemäß dem Stand der Technik; und
- Fig. 2: ein Blockschaltbild einer erfindungsgemäßen aspirativen Branderkennungsvorrichtung mit redundantem Lüfter.

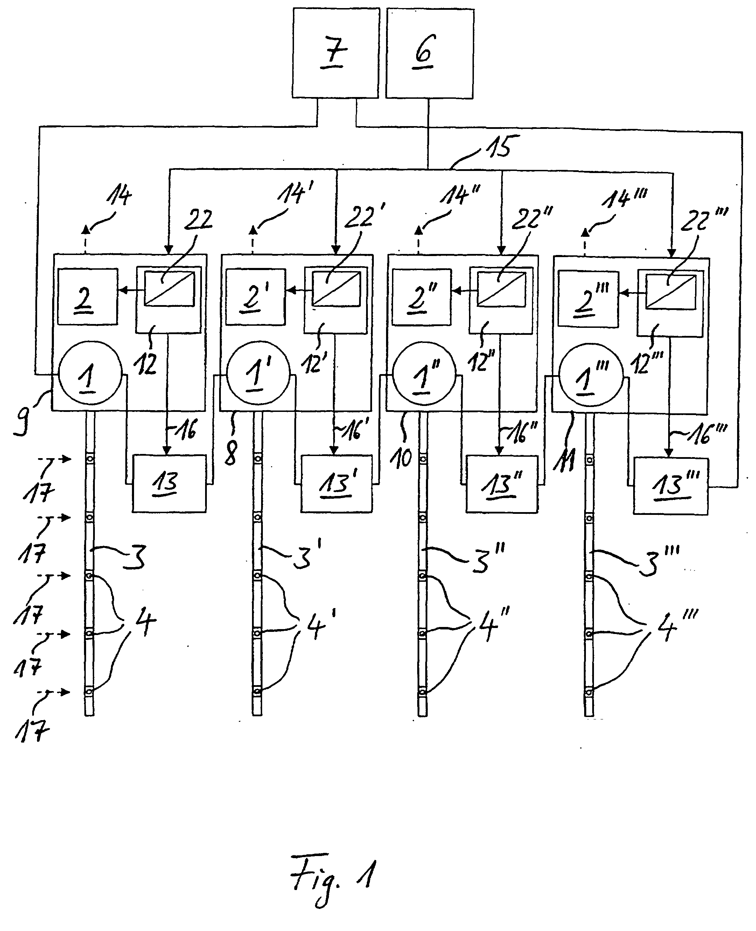

Fig. 1 zeigt ein Blockschaltbild einer aspirativen Branderkennungsvorrichtung gemäß dem Stand der Technik. Vier hier nicht dargestellte Gebäudeteile zu je fünf Räumen werden von je einer Zuleitung 3, 3', 3'', 3''' durchzogen, welche jeweils eine Reihe von Ansaugöffnungen 4, 4', 4'';, 4''' aufweisen. Somit ist jede der Zuleitungen 3, 3', 3'', 3''' für maximal fünf Räume zuständig. In Gehäusen 8, 9, 10, 11 sind für jeden Zuleitungsast 3, 3', 3'', 3''', das heißt für jeden der vier zu überwachenden Gebäudeteile, ein Detektor 1, 1', 1'', 1''', ein Luftstromsensor 12, 12', 12'', 12''', ein (erster) Lüfer 2, 2', 2'', 2''' sowie eine stabilisierte Spannungsversorgung 22, 22', 22'', 22''' vorhanden. Die Lüfter 2, 2', 2'', 2''' saugen in Richtung der Lufteinlaßpfeile Umgebungsluft durch die Ansaugöffnungen 4, 4', 4'', 4''' ein, die dann direkt dem jeweiligen Detektor 1, 1', 1'', 1''' zum Erkennen einer Brandkenngröße zugeführt wird. Die Lüfter 2, 2', 2'', 2''' sitzen hierbei in Ansaugrichtung hinter dem Detektor 1, 1', 1'', 1'''. Die von den Lüftern 2, 2', 2'', 2''' angesaugte Umgebungsluft wird danach über Luftauslässe 14, 14', 14'', 14''' wieder aus dem Meldergehäuse herausgeführt. Die Störungsmeldungen 16, 16', 16'' und 16''' werden mit Hilfe von Kontaktkopplern 13, 13'', 13'' und 13''' an die Brandmeldezentrale 7 übertragen. Die Kontaktkoppler 13, 13', 13'', 13''' und die einzelnen Detektoren 1, 1', 1'', 1''' sind mit einer Brandmeldezentrale 7 verbunden. Eine Notstromversorgung 6 stellt eine zeitweise Unabhängigkeit von der Netzspannung sicher. Die Notstromversorgung 6 ist über Leitungen 15 mit den Spannungsversorgungen 22, 22', 22'', 22''' verbunden. Die Luftstromsensoren 12, 12', 12'', 12''' melden über Leitungen 16, 16', 16'', 16''' an die Kontaktkoppler eine Störung, sobald sich der Massenstrom, der durch die Zuleitungen 3, 3', 3'', 3''' angesaugten Umgebungsluft sich über einen Schwellwert hinaus ändert.

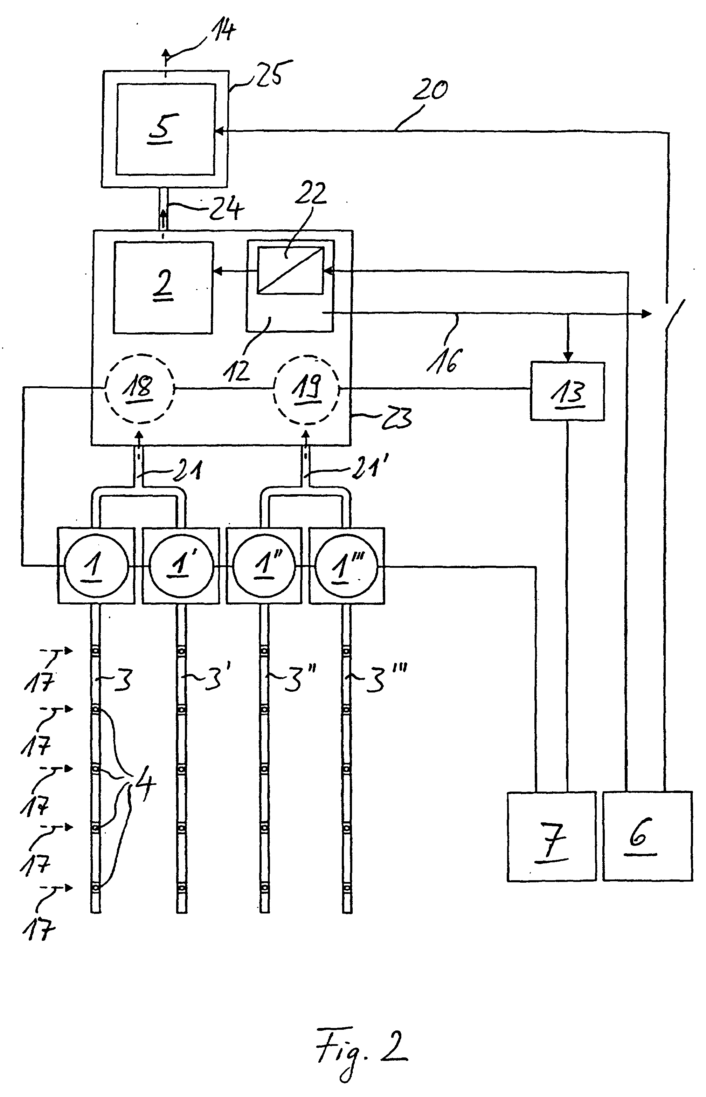

Fig. 2 zeigt ein Blockschaltbild einer erfindungsgemäßen Branderkennungsvorrichtung mit einem redundanten Lüfter 5. Hierbei bezeichnen gleiche Bezugszeichen gleiche Bauteile der Branderkennungsvorrichtung. Auch hier werden insgesamt vier Gebäudeteile mit vier Zuleitungsästen 3, 3', 3'', 3''' überwacht. Auch hier stehen vier Detektoren 1, 1', 1'', 1''' im Ansaugluftstrom zur Verfügung, um eventuelle Brandkenngrößen zu detektieren. Nachdem die angesaugten Umgebungsluftproben die Detektoren 1, 1', 1'', 1''' passiert haben, werden sie durch Verbindungsluftleitungen 21, 21' in ein Gehäuse 23 geleitet, in welchem sich beispielsweise - als Option - zwei Zusatzmelder 18, 19 im Luftstrom befinden können. Ansonsten werden die Umgebungsluftproben durch den Lüfter 2 weiterhin angesaugt und über eine weitere Verbindungsluftleitung 24 dem zweiten Lüfter 5 zugeführt, der im Normalbetrieb allerdings ausgeschaltet ist. Die Lüfterbox 25 des zweiten Lüfters 5 verlassen die Umgebungsluftproben wieder durch den Luftauslaß 14.

Der zweite Lüfter 5 ist über eine Versorgungsleitung 20 mit der Notstromversorgung 6 verbunden. Wie beim Stand der Technik ist auch bei dieser Branderkennungsvorrichtung ein Kontaktkoppler 13 vorgesehen, der über eine Leitung 16 eventuelle Störmeldungen des Luftstromsensors 12 entgegennimmt.

Im folgenden wird das erfindungsgemäße Verfahren anhand von Fig. 2 erläutert:

Der Lüfter 2 saugt in Richtung der Lufteinlasspfeile Umgebungsluftproben durch die mit Ansaugöffnungen 4 versehene Zuleitung 3 ein. Die Luftproben werden direkt dem Detektor 1 zum Erkennen einer Brandkenngröße zugeführt. Falls der Detektor 1 eine Brandkenngröße detektiert, wird ein Signal an eine Brandmeldezentrale 7 abgegeben. Die Umgebungsluftproben werden durch die Verbindungsleitungen 21 in das Gehäuse 23 und über eine weitere Verbindungsleitung 24 in eine Lüfterbox 25, in der ein zweiter Lüfter angebracht ist, geleitet. Durch den Luftauslaß 14 verlassen die Umgebungsluftproben die Lüfterbox 25. Wenn der erste Lüfter 2 oder dessen Stromversorgung ausfällt, wird mittels eines Kopplers 13 eine Störungsmeldung an die Brandmeldezentrale 7 übertragen. Der zweite Lüfter 5, der über eigene Kabelwege mit der zentralen Stromversorgung verbunden ist, wird eingesetzt. Die Umgebungsluftproben werden dann über die Verbindungsleitung 24 durch den zweiten Lüfter 5 angesaugt und dem Detektor 1 zugeführt. Falls einer der Lüfter 2, 5 durch einen Stromversorgungsfehler ausfällt, werden die Lüfter aus einer Notstromversorgung gespeist.

## Patentansprüche

1. Aspirative Branderkennungsvorrichtung zum Detektieren von Entstehungsbränden, mit einem Detektor (1) zum Erkennen einer Brandkenngröße, und mit einem ersten Lüfter (2), der dem Detektor (1) über eine Zuleitung (3), die mit Ansaugöffnungen (4) versehen ist, Umgebungsluftproben zuführt,
**gekennzeichnet durch**
einen zweiten Lüfter (5), der im Ansaugsystem in Reihe oder parallel zum ersten Lüfter (2) angeordnet ist.

2. Aspirative Branderkennungsvorrichtung nach Anspruch 1,
**dadurch gekennzeichnet, daß**
der zweite Lüfter (5) direkt aus der Notstromversorgung gespeist ist.

3. Aspirative Branderkennungsvorrichtung nach Anspruch 1 oder 2,
**dadurch gekennzeichnet, daß**
der zweite Lüfter (5) erst im Falle einer Störung im Ansaugweg in Betrieb genommen geht.

4. Aspirative Branderkennungsvorrichtung nach einem der Ansprüche 1 bis 3,
**dadurch gekennzeichnet, daß**
der erste Lüfter (2) und der zweite Lüfter (5) über getrennte Kabelwege mit der zentralen Stromversorgung (6) verbunden sind.

5. Aspirative Branderkennungsvorrichtung nach einem der vorstehenden Ansprüche,
**dadurch gekennzeichnet, daß**
der erste und der zweite Lüfter mit einer stabilisierten Spannung versorgt sind.

6. Verfahren zum Detektieren von Entstehungsbränden mit folgenden Verfahrensschritten:
a) einem Detektor (1) zum Erkennen einer Brandgröße werden über eine Zuleitung (3), die eine Anzahl von Ansaugöffnungen (4) aufweist, durch einen ersten Lüfter (2) kontinuierlich Umgebungsluftproben zugeführt,
b) wenn der Detektor (1) eine Brandkenngröße detektiert, wird ein Signal an eine Brandmeldezentrale (7) abgegeben, und
c) beim Ausfall des ersten Lüfters (2) oder dessen Versorgungsspannung wird eine Störungsmeldung an die Brandmeldezentrale (7) übertragen,
**gekennzeichnet durch** folgende Verfahrensschritte:
d) ein zweiter Lüfter (5), der in Reihe oder parallel zum ersten Lüfter (2) angeordnet ist, wird eingesetzt, und
e) die Umgebungsluftproben werden über eine Verbindungsleitung (24) **durch** den zweiten Lüfter (5) angesaugt und dem Detektor (1) zugeführt.

7. Verfahren nach Anspruch 6,
**dadurch gekennzeichnet, daß**
der erste Lüfter (2) und der zweite Lüfter (5) beim Auftreten eines Fehlers in der zentralen Stromversorgung (6) aus einer Notstromversorgung gespeist werden.

## Claims

1. An aspirative fire detection apparatus for the detection of incipient fires with a detector (1) for detecting a fire parameter, and with a first fan (2) which supplies ambient air samples to the detector (1) via a supply line (3) which is provided with aspiration openings (4),
**characterised by**
a second fan (5) which is arranged in the aspiration system in series with or parallel to the first fan (2).

2. The aspirative fire detection apparatus according to Claim 1,
**characterised in that**
the second fan (5) is directly powered from the standby power supply.

3. The aspirative fire detection apparatus according to Claim 1 or 2,
**characterised in that**
the second fan (5) is put into operation only in the case of a malfunction in the aspiration path.

4. The aspirative fire detection apparatus according to one of Claims 1 to 3,
**characterised in that**
the first fan (2) and the second fan (5) are connected with the central power supply (6) via separate cable runs.

5. The aspirative fire detection apparatus according to one of the previous claims,
**characterised in that**
the first and the second fan are supplied with a stabilised voltage.

6. A method for detecting incipient fires, comprising the following process steps:
a) a detector (1) for detecting a fire parameter is continuously supplied ambient air samples by a first fan (2) via a supply line (3) which comprises a number of aspiration openings (4);
b) if the detector (1) detects a fire parameter a signal is emitted to a fire alarm receiving station (7); and
c) upon a failure of the first fan (2) or its supply voltage, a fault signal is transmitted to the fire alarm receiving station (7),
**characterised by** the following process steps:
d) a second fan (5) which is connected in series with or parallel to the first fan (2) is employed; and
e) the ambient air samples are aspirated by the second fan (5) via a connecting line (24) and supplied to the detector (1).

7. The method according to Claim 6,
**characterised in that**
upon the occurrence of a malfunction in the central power supply (6), the first fan (2) and the second fan (5) are powered from a standby power supply.

## Revendications

1. Dispositif de détection d'incendie par aspiration pour détecter des incendies naissants, comportant un détecteur (1) pour reconnaître un paramètre caractéristique d'incendie, et comportant un premier ventilateur (2) qui amène des échantillons d'air environnant au détecteur (1) via une conduite d'amenée (3) pourvue d'ouvertures d'aspiration (4),
**caractérisé par** un deuxième ventilateur (5) qui est agencé dans le système d'aspiration en série ou en parallèle au premier ventilateur (2).

2. Dispositif de détection d'incendie par aspiration selon la revendication 1, **caractérisé en ce que** le deuxième ventilateur (5) est alimenté directement à partir de l'alimentation électrique de secours.

3. Dispositif de détection d'incendie par aspiration selon l'une ou l'autre des revendications 1 et 2, **caractérisé en ce que** le deuxième ventilateur (5) est mis en service uniquement en cas de perturbation dans le trajet d'aspiration.

4. Dispositif de détection d'incendie par aspiration selon l'une des revendications 1 à 3, **caractérisé en ce que** le premier ventilateur (2) et le deuxième ventilateur (5) sont reliés à l'alimentation électrique centrale (6) via des câbles suivant des trajets séparés.

5. Dispositif de détection d'incendie par aspiration selon l'une des revendications précédentes, **caractérisé en ce que** le premier et le deuxième ventilateur sont alimentés en tension stabilisée.

6. Procédé pour détecter des incendies naissants, comprenant les étapes suivantes :
a) au moyen d'un premier ventilateur (2), des échantillons d'air environnant sont amenés en continu à un détecteur (1), destiné à reconnaître un paramètre d'incendie, via une conduite d'amenée (3) présentant un certain nombre d'ouvertures d'aspiration (4),
b) lorsque le détecteur (1) détecte un paramètre caractéristique d'incendie, un signal est émis à une centrale d'alarme d'incendie (7), et
c) en cas de défaillance du premier ventilateur (2) ou de sa tension d'alimentation, un message de perturbation est transmis à la centrale d'alarme d'incendie (7),
**caractérisé par** les étapes suivantes :
d) on utilise un deuxième ventilateur (5) qui est agencé en série ou en parallèle au premier ventilateur (2), et
e) les échantillons d'air environnant sont aspirés par le deuxième ventilateur (5) via une conduite de liaison et amenés au détecteur (1).

7. Procédé selon la revendication 6, **caractérisé en ce qu'**en cas d'apparition d'une erreur dans l'alimentation électrique centrale (6), le premier ventilateur (2) et le deuxième ventilateur (5) sont alimentés à partir d'une alimentation électrique de secours.
